(19)

Europäisches
Patentamt
European
Patent Office
Office européen
des brevets

(11) **EP 2 458 861 A1**

(12) **EUROPEAN PATENT APPLICATION**

(43) Date of publication:
**30.05.2012 Bulletin 2012/22**

(51) Int Cl.:
*H04N 7/26* [(2006.01)]   *H04N 7/50* [(2006.01)]

(21) Application number: **10306297.2**

(22) Date of filing: **25.11.2010**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **ST-Ericsson SA
1228 Plan-les-Ouates (CH)**

(72) Inventor: **Valente, Stéphane
75020, PARIS (FR)**

(74) Representative: **Cabinet Plasseraud
52, rue de la Victoire
75440 Paris Cedex 09 (FR)**

(54) **Bit rate regulation module and method for regulating bit rate**

(57)   Bit rate regulation module (3) comprising:
- a selection block (31) configured to select a frame type to be used to encode a current frame of a video,
- a determination block (32) configured to determine a target number of bits to be used to encode the current frame, and- a computation block (33) configured to compute a quantization step to be used to encode the current frame by using a rate model taking into account a quantization step of a previously encoded reference frame and by modelling rate variations due to a quantization step change between the previously encoded reference frame and the current frame,

FIG. 5

**Description**

**TECHNICAL FIELD**

The present invention generally relates to devices and methods for regulating bit rate for encoding video frames.

**BACKGROUND**

The approaches described in this section could be pursued, but are not necessarily approaches that have been previously conceived or pursued. Therefore, unless otherwise indicated herein, the approaches described in this section are not prior art to the claims in this application and are not admitted to be prior art by inclusion in this section. Furthermore, all embodiments are not necessarily intended to solve all or even any of the problems brought forward in this section.

In a block-based video encoder, following for instance the H.264 recommendation, one of the main control parameters for the bit rate is the quantization parameter (QP) or quantization step (Qstep), which may be chosen at various levels. In a video sequence level, a video is encoded with a constant quality level, using a single quantization step for the whole sequence. In a video frame level, the quantization step varies from one frame to the other. And, in a macro-block level, the quantization step varies from one macro-block to the other, a macro-block comprising for example $16^*16$ pixels.

A frame of a video is encoded according to a frame type, which can be Intra-frame (I), Predicted-frame (P) or Bidirectional-frame (B). See for example the H.264 standard.

A frame of I frame type can be decoded independently of any other frame.

The P frame type improves compression by exploiting the temporal redundancy in a video. P frames encode only the difference in image from a reference frame (e.g. an I picture frame or a P picture frame or a B picture frame) immediately preceding it in coding order. This reference frame is also called an anchor frame.

The B frame type is quite similar to P frame type, except it can make predictions by predicting from two anchor frames at the same time.

A goal of a bit rate regulation module is to control the Qstep parameter during encoding, in order to enforce a required bit-rate and meet buffer constraints. Given a target bit budget for a frame and the frame type (I/P/B) of the next frame to be encoded, the regulation finds an appropriate quantization step using a bit rate model.

For example, one possible bit rate model for MPEG-2 is:

$$Qstep*Pbits = \chi_{frame\_type}$$

Where Pbits is the number of frame bits, and $\chi_{frame-type}$ denotes the complexity of a frame, frame_type being the frame type, either I, P or B. $\chi_{frame-type}$ depends on the sequence, the standard and the frame type (I or P or B) but is assumed to remain constant for frames of the same type between scene cuts.

For the intra rate model (I frames), there is a good correlation between the spatial activity of the frame (for instance the sum of absolute transform (e.g. Discrete Fourier Transform, Z-transform, Hadamard Transform, Discrete Hartley Transform Discrete Cosine Transform, Discrete Sine Transform, Modified Discrete Cosine Transform, or other suitable transform) coefficients computed on the luminance channel of the frame), quantization steps and bit consumptions. It allows to infer the complexity of the frame, by expanding it as:

$$Qstep*Pbits = \alpha.activity$$

where a is a constant that depends on the video encoder and video standard, the activity can be measured during a preprocessing step on the frame.

Given a bit target $Pbits_{target}$ for the frame, the regulation module can use the rate model above to derive the right quantization step for the encoding:

$$Qstep = \alpha.activity/Pbits_{target}$$

For the inter rate model (P or B frames), right after a scene-cut (i.e. when the video content changes from one scene to the other), the complexity of the frame $\chi_{frame-type}$ is unknown. For the first P or B frame after a scene-cut, a default complexity $\chi_{frame-type}$ is used. Right after encoding, once the number of bits for the frame is known, the complexity can be updated as:

$$\chi_{frame\_type} = Qstep * Pbits$$

For the next frame of the same type, the regulation module can use the formula below to determine the right quantization step from the target bits:

$$Qstep = \chi_{frame\_type}/Pbits_{target}$$

One problem with the solution above is that for temporally predicted frames such as P or B frames, which are predicted from previously encoded frames (called reference frames), the equation $Qstep*Pbits=\chi_{frame-type}$ is valid only in stationary mode, i.e. when the reference frame(s) was(were) already encoded with the same quantization step.

When the bit budget changes from one frame to the other, or if the rate model did not lead to the correct quantization step computation for the previous frame because the measured complexity was not valid, the regulation will have problems to find the correct value and stabilize the quantization step for the sequence, causing variations in the video quality.

Thus, there is a need for improved methods and devices for bit rate regulation.

**SUMMARY**

To address these needs, a first aspect of the present invention relates to a bit rate regulation module comprising:

- a selection block configured to select a frame type to be used to encode a current frame of a video,

- a determination block configured to determine a target number of bits to be used to encode the current frame, and

- a computation block configured to compute a quantization step to be used to encode the current frame by using a rate model taking into account a quantization step of a previously encoded reference frame and by modelling rate variations due to a quantization step change between the previously encoded reference frame and the current frame. One object of this bit rate regulation module is to predict the number of bits for encoding a frame by a quantization step. Such prediction may be achieved even if the quantization step is not the same one as in the reference frame. Such prediction may be achieved even for a temporally predicted frame such as P or B picture. Thus, the prediction result may be improved. A better prediction typically allows the bit rate regulation module to converge more quickly to a stable quantization step size value, which in turn offers a more stable, and thus subjectively better, video quality.

In some embodiments of the invention, the bit rate regulation module may be configured to select the frame type among Intra-frame, Predicted-frame and Bidirectional-frame.

In some embodiments of the invention, the bit rate regulation module may be configured to select the frame type according to a predefined pattern.

In some embodiments of the invention, for predicted frames such as P or B frames, the bit rate regulation module may be configured to model rate variations by decomposing a number of bits required for encoding the current frame into a first number of bits required if the previous reference frame had the same quantization step as the current frame, and a second number of bits corresponding to a change of quantization step between the previous reference frame and the current frame.

The bit rate regulation module may further be configured to define the first number of bits as the ratio of a complexity of the current frame to the quantization step of the current frame.

The bit rate regulation module may further be configured to define the second number of bits as the difference of the first number of bits and a number of bits associated with the previous reference frame.

The bit rate regulation module may further be configured to define the number of bits as a function of the complexity, of the quantization step of the current frame, and of the quantization step of the previous reference frame.

The bit rate regulation module may further be configured to compute the quantization step of the current frame as a function of the complexity, of the quantization step of the previous reference frame, and of the target number of bits.

In some embodiments of the invention, the bit rate regulation module may further be configured to update the rate model once the current frame has been encoded.

The bit rate regulation module may further be configured to update the rate model by updating a complexity of the current frame by removing a number of bits, corresponding to a change of quantization step between the previous reference frame and the current frame, from an actual number of bits produced for the frame.

A second aspect relates to a video encoder comprising:

- a reception module configured to receive a current frame of a video,

- a bit rate regulation module according to the first aspect, and

- an encoding module configured to encode the current frame by using the quantization step computed by the bit rate regulation module.

A third aspect relates to an electronic device comprising a video encoder according to the second aspect.

A fourth aspect relates to a method for regulating bit rate for encoding a video comprising the steps of :

- determining a target number of bits to be used to encode a current frame of the video,

- computing a quantization step to be used to encode the current frame by using a rate model taking into account a quantization step of a previously encoded reference frame and by modelling rate variations due to a quantization step change between the previously encoded reference frame and the current frame.

The method may comprise a step of selecting a frame type to be used to encode the current frame.

The method may further comprise a step of encoding the current frame by using the quantization step computed.

The modelling may comprise an operation of decomposing a number of bits required for encoding the current frame into a first number of bits required if the previous reference frame had the same quantization step as the current frame, and a second number of bits corresponding to a change of quantization step between the previous reference frame and the current frame.

A fifth aspect relates to a computer program product comprising one or more stored sequences of instructions that are accessible to a processor and which, when executed by the processor, cause the processor to carry out the steps of the method according to the fourth aspect.

## BRIEF DESCRIPTION OF THE DRAWINGS

The present invention is illustrated by way of example, and not by way of limitation, in the figures of the accompanying drawings, in which:

- Fig.1 is a schematic block diagram of a video encoder according to an embodiment of the invention;

- Fig.2 is a flow chart showing steps of a method for encoding a frame according to an embodiment of the invention;

- Fig.3 is a chart which shows curves giving the quantization parameter versus the frame number for rate models according to the state of the art and to some embodiments of the invention;

- Fig.4 is a chart which shows curves giving the number of bits versus the frame number for rate models according to the state of the art and to some embodiments of the invention; and

- Fig.5 is a schematic block diagram of a bit rate regulation module of the video encoder of Fig.1.

## DESCRIPTION OF EMBODIMENTS

Embodiments of the invention deal with the problem of improving the quality of a video by improving the bit rate regulation during encoding. Embodiments of the invention may, in particular, be applicable for temporally predicted frames such as Predicted-frame (P) or Bidirectional-frame (B).

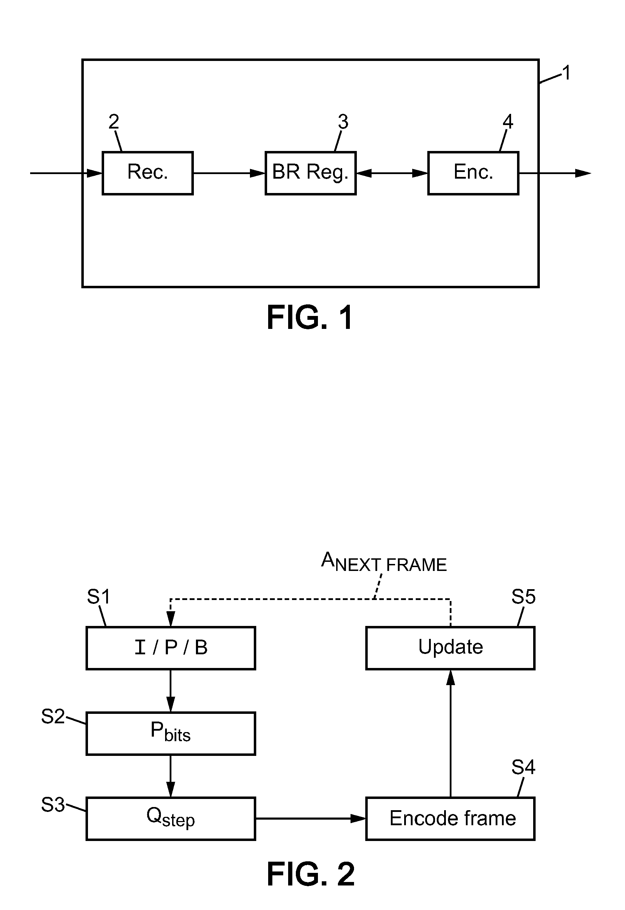

Fig.1 shows a video encoder 1 comprising a reception module 2, a bit rate regulation module 3, and an encoding module 4.

The reception module 2 is configured to receive a picture or frame of the video.

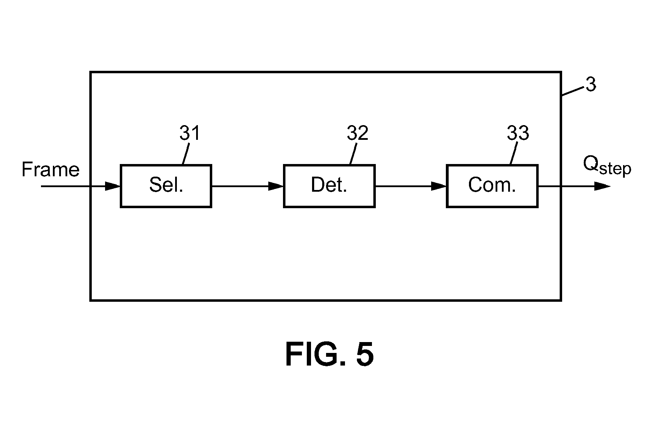

Referring to Fig. 5, the bit rate regulation module 3 comprises a selection block 31 configured to select a frame type to be used to encode the frame received. The frame type can, for example, be Intra-frame (I), Predicted-frame (P) or Bidirectional-frame (B).

The bit rate regulation module 3 further comprises a determination block 32 configured to determine, by using the frame type selected, a target number of bits for encoding the frame.

The bit rate regulation module 3 further comprises a computation block 33 configured to compute, by using the target number of bits, a quantization step Qstep. As explained below, the quantization step Qstep is computed by using a rate model, which takes into account a quantization step $Qstep_{ref}$ of a previous reference frame and models rate variations due to a quantization step change.

The encoding module 4 is configured to encode the frame by using the quantization step Qstep computed by the bit rate regulation module 3.

Referring to Fig.2 we are describing below steps of a method for encoding a frame according to an embodiment. The method of Fig. 2 may, according to some embodiments be performed by the video encoder of Fig.1.

In step S1, the bit rate regulation module 3 selects a frame type to be used to encode a frame. The frame may have been received by the reception module 2 of the video encoder 1.

The frame type can be Intra-frame (I), Predicted-frame (P) or Bidirectional-frame (B). The selection may, for example, be done according to a predefined pattern. For instance, the I frame type may be selected for a first frame of the video, then the P frame type may be selected for a second frame of the video, then the B frame type may be selected for a third frame of the video, etc.

In step S2, the bit rate regulation module 3 uses the frame type selected in step S1 to determine a target number of bits for encoding the frame.

The determination may be performed by any suitable method currently known in the prior art or later to be developed.

For example, if the regulation module works on the basis of a bit rate window, and has a target number of bits over this window WindowTargetBits, the target number of bits for a P frame can be given by

$$Pbits_{target} = (WindowTargetBits*WeightP) /$$

(NumberI*WeightI+NumberP*WeightP+NumberB*WeightB)

where NumberI, NumberP and NumberB are respectively the number of I, P and B frames in the bit rate window, and WeightI, WeightP and WeightB are respectively the weights for I, P and B frames. Such weights can be arbitrarily defined a priori, for instance with WeightI=6, WeightP=2 and WeightB=1, to reflect the fact that empirically, for a given Qstep, the P frame type requires twice the number of bits of the B frame type, and the I frame type requires three times the number of bits of the P frame type. This formula simply balances the target bit budget between the frames that will be encoded within the sliding window according to the encoded frame types. It should be noted that alternatively, step S2 can be done using any suitable method of the prior art or developed in the future.

In step S3, the bit rate regulation module 3 uses the target number of bits determined in step S2 to compute — based on the rate model — a quantization step Qstep that will match the target number of bits.

The quantization step Qstep for predicted frames such as P or B frames is computed by using a rate model in which the number of produced bits is decomposed in two terms:

$$Pbits = Pbits_{stationary\ mode} + Pbits_{change}$$

where Pbits refers to the number of bits required for the frame to be encoded, $Pbits_{stationary}$ mode refers to the number of bits required if the reference frame for encoding had the same quantization step Qstep as the current frame, and $Pbits_{change}$ refers to the number of bits coming from a change of quantization step between the reference frame and the current frame.

For a given quantization step Qstep, we have:

$$Pbits_{stationary\ mode} = \chi_{frame\ type}/Qstep$$

Where $\chi_{frame}$ type denotes the complexity of the frame and depends on the sequence, the standard and the frame type (I, P or B).

When the reference frame has been encoded with a quantization step $Qstep_{ref}$, the difference in bits between the current frame and the reference frame is given by the difference of their stationary mode bits:

$$Pbits_{change} = Pbits_{stationary\ mode} - Pbits_{stationary\ mode,ref}$$

Furthermore, the number of bits of stationary mode for the reference frame is equal to:

$$Pbits_{stationary\ mode,ref} = \chi_{frame\_type} / Qstep_{ref},$$

As a consequence, we have:

$$Pbits_{change} = \chi_{frame\_type} / Qstep - \chi_{frame\_type} / Qstep_{ref}$$

When adding $Pbits_{stationary\ mode}$ and $Pbits_{change}$, we finally get:

$$Pbits = 2 * \chi_{frame\_type} / Qstep - \chi_{frame\_type} / Qstep_{ref}$$

Using this rate model, the bit rate regulation module 3 can then find the appropriate quantization step Qstep for the current frame given the target number of bits $PbitS_{target}$, the complexity $\chi_{frame-type}$ and the $Qstep_{ref}$ of the reference frame:

$$Qstep = 2 * \chi_{frame\_type} / (Pbits_{target} + \chi_{frame\_type} / Qstep_{ref})$$

In step S4, the encoding module 4 encodes the frame by using the quantization step Qstep computed in step S3.

In step S5, the bit rate regulation module 3 updates the rate model given the number of produced bits for the frame. In other words, once the frame has been coded, the complexity $\chi_{frame-type}$ is updated as if the frame had been encoded in the stationary mode, by removing the predicted $Pbits_{change}$ from the actual number of bits Pbits produced for the frame, as:

$$\chi_{frame\_type} = (Pbits - Pbits_{change}) * Qstep$$

After step S5, the video encoder 1 is ready to encode the next frame of the video, as symbolized by the arrow Anext frame.

One advantage of the rate model described above is that it allows to predict the number of bits for encoding a frame by a quantization step Qstep even if it is not the same one as in the reference frame. A better prediction allows the bit rate regulation module 3 to converge more quickly to a stable quantization step size value, which in turn offers a more stable, and thus subjectively better, video quality.

When the video encoder 1 works in low-delay mode, for example for video telephony, it also allows to encode more frames. If the bit rate regulation module 3 does not find the right quantization step Qstep for the given target number of bits, either the frame cannot be encoded in low delay and is skipped by the encoder, or it arrives out of delay at the encoder. Embodiment of the invention decreases the probability of this problem.

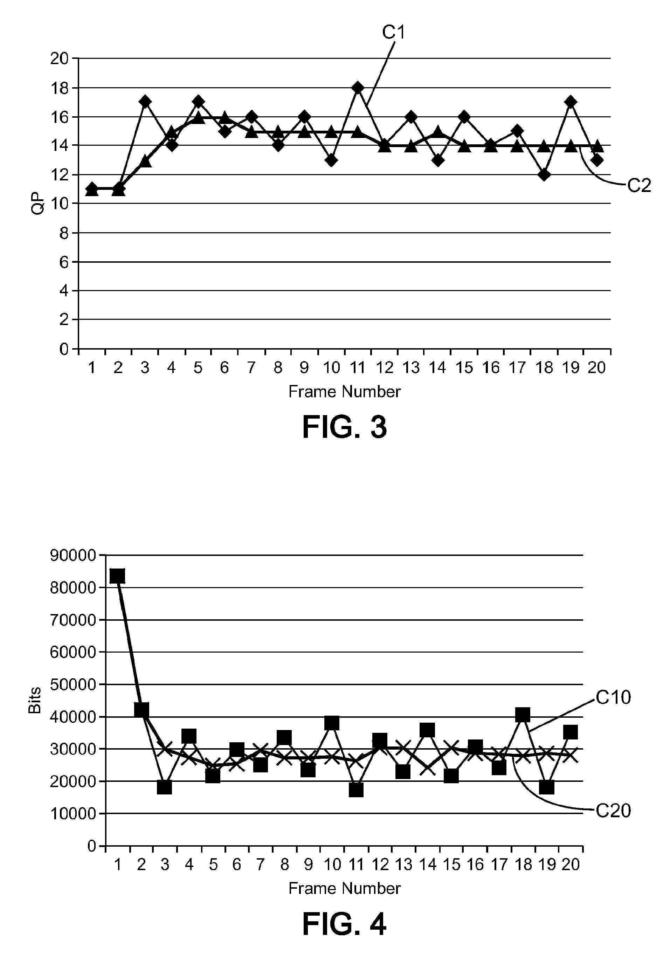

Fig.3 shows a curve $C_1$ giving the quantization parameter QP versus the frame number for a rate model according to the state of the art, and a curve $C_2$ giving the quantization parameter QP versus the frame number for the rate model according to an embodiment of the invention. As it can be seen, the quantization parameter QP, which indicates the actual quantization step Qstep in the bitstream, found by the regulation module according to the state of the art oscillates from one frame to the other. This oscillation causes unstable numbers of bits used for each frame, as represented in Fig.4 showing a curve Cio giving the number of bits versus the frame number according to the state of the art and a curve $C_{20}$ giving the number of bits versus the frame number according to an embodiment of the invention.

One other advantage of the method described above is that it also allows to keep a simple linear rate model, avoiding more complex quadratic ones, such as the VM8 proposed for MPEG-4.

Embodiments of the invention may be implemented in hardware or software or a combination thereof. For example, embodiments of the inventions may be implemented in an integrated circuit such as an application-specific integrated circuit (ASIC).

Embodiments of the invention may be performed by a computer program product comprising one or more stored sequences of instructions. Sequences of instructions are accessible to a processor and, when executed by the processor, cause the processor to carry out steps of the method for encoding a video. The computer program product may be, for example, a CD-ROM.

While there has been illustrated and described what are presently considered to be the preferred embodiments of the present invention, it will be understood by those skilled in the art that various other modifications may be made, and equivalents may be substituted, without departing from the true scope of the present invention. Additionally, many modifications may be made to adapt a particular situation to the teachings of the present invention without departing from the central inventive concept described herein. Furthermore, an embodiment of the present invention may not include all of the features described above. Therefore, it is intended that the present invention not be limited to the particular embodiments disclosed, but that the invention include all embodiments falling within the scope of the invention as broadly defined above.

Expressions such as "comprise", "include", "incorporate", "contain", "is" and "have" are to be construed in a non-exclusive manner when interpreting the description and its associated claims, namely construed to allow for other items or components which are not explicitly defined also to be present. Reference to the singular is also to be construed in be a reference to the plural and vice versa.

A person skilled in the art will readily appreciate that various parameters disclosed in the description may be modified and that various embodiments disclosed may be combined without departing from the scope of the invention.

**Claims**

1. Bit rate regulation module (3) comprising:

   - a selection block (31) configured to select a frame type to be used to encode a current frame of a video,
   - a determination block (32) configured to determine a target number of bits to be used to encode the current frame, and
   - a computation block (33) configured to compute a quantization step to be used to encode the current frame by using a rate model taking into account a quantization step of a previously encoded reference frame and by modelling rate variations due to a quantization step change between the previously encoded reference frame and the current frame,

2. Bit rate regulation module (3) according to claim 1, configured to model rate variations by decomposing a number of bits (Pbits) required for encoding the current frame into a first number of bits ($Pbits_{stationary\ mode}$) required if the previous reference frame had the same quantization step as the current frame, and a second number of bits ($Pbits_{change}$) corresponding to a change of quantization step between the previous reference frame and the current frame.

3. Bit rate regulation module (3) according to claim 2, configured to define the first number of bits ($Pbits_{stationary\ mode}$) as the ratio of a complexity ($\chi_{frame\ type}$) of the current frame to the quantization step (Qstep) of the current frame.

4. Bit rate regulation module (3) according to claim 2 or 3, configured to define the second number of bits ($Pbit_{Schange}$) as the difference of the first number of bits ($Pbits_{stationary\ mode}$) and a number of bits ($Pbits_{stationary\ mode,ref}$) associated with the previous reference frame.

5. Bit rate regulation module (3) according to one of the claims 3 or 4, configured to define the number of bits (Pbits) as a function of the complexity ($\chi_{frame\ type}$), of the quantization step (Qstep) of the current frame, and of the quantization step ($Qstep_{ref}$) of the previous reference frame.

6. Bit rate regulation module (3) according to claim 5, configured to compute the quantization step (Qstep) of the current frame as a function of the complexity (xframe type), of the quantization step ($Qstep_{ref}$) of the previous reference frame, and of the target number of bits ($Pbits_{target}$).

7. Bit rate regulation module (3) according to claim 1, further configured to update the rate model once the current frame has been encoded.

8. Bit rate regulation module (3) according to claim 7, configured to update the rate model by updating a complexity ($\chi_{frame-type}$) of the current frame by removing a number of bits ($Pbits_{change}$), corresponding to a change of quantization step between the previous reference frame and the current frame, from an actual number of bits (Pbits) produced for the frame.

9. Video encoder (1) comprising :

   - a reception module (2) configured to receive a current frame of a video,
   - a bit rate regulation module (3) according to one of the claims 1 to 8,
   and
   - an encoding module (4) configured to encode the current frame by using the quantization step computed by the bit rate regulation module (3).

10. Electronic device comprising a video encoder according to claim 9.

11. Method for regulating bit rate for encoding a video comprising the steps of :

    - determining a target number of bits to be used to encode a current frame of the video,
    - computing a quantization step to be used to encode the current frame by using a rate model taking into account a quantization step of a previously encoded reference frame and by modelling rate variations due to a quantization step change between the previously encoded reference frame and the current frame.

12. Method according to claim 11, comprising a step of selecting a frame type to be used to encode the current frame.

13. Method according to claim 11, comprising a step of encoding the current frame by using the quantization step computed.

14. Method according to claim 11, wherein the modelling comprises an operation of decomposing a number of bits (Pbits) required for encoding the current frame into a first number of bits ($Pbits_{stationary\ mode}$) required if the previous reference frame had the same quantization step as the current frame, and a second number of bits ($Pbits_{change}$) corresponding to a change of quantization step between the previous reference frame and the current frame.

15. Computer program product comprising one or more stored sequences of instructions that are accessible to a processor and which, when executed by the processor, cause the processor to carry out the steps of any of claims 11 to 14.

**FIG. 1**

**FIG. 2**

FIG. 3

FIG. 4

Frame → **Sel.** 31 → **Det.** 32 → **Com.** 33 → $Q_{step}$

3

## FIG. 5

Europäisches
Patentamt
European
Patent Office
Office européen
des brevets

# EUROPEAN SEARCH REPORT

Application Number

EP 10 30 6297

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/086816 A1 (LEONTARIS ATHANASIOS [US] ET AL) 2 April 2009 (2009-04-02) * paragraph [0069] - paragraph [0079]; figure 1 * * paragraph [0193] - paragraph [0215]; figure 15 * * paragraph [0216] - paragraph [0232]; figure 16 * * paragraph [0233] - paragraph [0266] * | 1-15 | INV. H04N7/26 H04N7/50 |
| X | YOU-NENG XIAO ET AL: "Efficient Rate Control for MPEG-2 to H.264/AVC Transcoding", CONFERENCE PROCEEDINGS / IEEE INTERNATIONAL SYMPOSIUM ON CIRCUITS AND SYSTEMS (ISCAS) : MAY 23 - 26, 2005, INTERNATIONAL CONFERENCE CENTER, KOBE, JAPAN, IEEE SERVICE CENTER, PISCATAWAY, NJ, 23 May 2005 (2005-05-23), pages 1238-1241, XP010815934, DOI: DOI:10.1109/ISCAS.2005.1464818 ISBN: 978-0-7803-8834-5 | 1-7,9-15 | |
| A | * the whole document * | 8 | TECHNICAL FIELDS SEARCHED (IPC) H04N |
| X | ZHENZHONG CHEN ET AL: "An efficient algorithm for H.264/AVC high definition video coding", IEEE TRANSACTIONS ON CONSUMER ELECTRONICS, IEEE SERVICE CENTER, NEW YORK, NY, US, vol. 54, no. 4, 1 November 2008 (2008-11-01), pages 1852-1857, XP011239757, ISSN: 0098-3063, DOI: DOI:10.1109/TCE.2008.4711245 | 1,2,9-15 | |
| A | * the whole document * | 3-8 | |

-/--

The present search report has been drawn up for all claims

| Place of search | Date of completion of the search | Examiner |
|---|---|---|
| The Hague | 28 February 2011 | Martinière, Anthony |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 10 30 6297

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ZHANG N ET AL: "Improving bits allocation and quantization level control for MPEG2 encoders", INDUSTRIAL ELECTRONICS, CONTROL, AND INSTRUMENTATION, 1996., PROCEEDIN GS OF THE 1996 IEEE IECON 22ND INTERNATIONAL CONFERENCE ON TAIPEI, TAIWAN 5-10 AUG. 1996, NEW YORK, NY, USA,IEEE, US, vol. 1, 5 August 1996 (1996-08-05), pages 560-565, XP010203351, DOI: DOI:10.1109/IECON.1996.571014 ISBN: 978-0-7803-2775-7 * the whole document * | 1-15 | |
| A | "Test Model 5 (Test Model Editing Committee)", ITU STUDY GROUP 16 - VIDEO CODING EXPERTS GROUP -ISO/IEC MPEG & ITU-T VCEG(ISO/IEC JTC1/SC29/WG11 AND ITU-T SG16 Q6), XX, XX, no. AVC-491b, 27 March 1993 (1993-03-27), XP030000486, * page 54 - page 57 * | 1-15 | TECHNICAL FIELDS SEARCHED (IPC) |

The present search report has been drawn up for all claims

| Place of search | Date of completion of the search | Examiner |
|---|---|---|
| The Hague | 28 February 2011 | Martinière, Anthony |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 10 30 6297

This annex lists the patent family members relating to the patent documents cited in the above-mentioned European search report.
The members are as contained in the European Patent Office EDP file on
The European Patent Office is in no way liable for these particulars which are merely given for the purpose of information.

28-02-2011

| Patent document cited in search report | Publication date | Patent family member(s) | Publication date |
|---|---|---|---|
| US 2009086816 A1 | 02-04-2009 | CN 101855910 A<br>EP 2191651 A1<br>EP 2227020 A1<br>JP 2010541386 T<br>WO 2009045683 A1 | 06-10-2010<br>02-06-2010<br>08-09-2010<br>24-12-2010<br>09-04-2009 |

For more details about this annex : see Official Journal of the European Patent Office, No. 12/82